# EUROPEAN PATENT APPLICATION

(11) **EP 2 914 012 A1**
(43) Date of publication of application: **02.09.2015**
(21) Application number: 15154502.7
(22) Date of filing: 10.02.2015
(51) Int. Cl.: H04N 21/438

(54) **Broadcast receiver and control method thereof**

(30) Priority: 27.02.2014 KR 20140023287
(71) Applicant: Samsung Electronics Co., Ltd, Gyeonggi-do 443-742 (KR)
(72) Inventor: Kim, Hyun-jun, Seoul (KR); Kim, Ki-suk, Gyeonggi-do (KR); Jang, Ip-dong, Gwangju (KR); Jung, Eui-jun, Gyeonggi-do (KR)
(74) Representative: Appleyard Lees

(57) **Abstract**

Disclosed are a broadcast receiver and a method thereof, in which channels are automatically scanned. The broadcast receiver includes: a signal receiver configured to receive a broadcasting signal of one frequency band among a plurality of frequency bands; and a controller configured to determine presence or absence of a corresponding broadcasting signal for each of the plurality of frequency bands by checking properties of each of the plurality of frequency bands, and control a channel scanning operation to be performed. The controller controls the signal receiver not to perform the channel scanning operation with regard to one or more frequency bands, in which it is determined that the corresponding broadcasting signal is absent.

## Description

### BACKGROUND

### Field

Apparatuses and methods consistent with the exemplary embodiments relate to a broadcast receiver and a control method thereof, and more particularly to a broadcast receiver and a control method thereof in which automatic setting of a plurality of channels can be quickly performed.

### Description of Related Art

In a digital broadcast receiver such as a television (TV), a set-top box, etc., broadcasting channels are automatically scanned and channel numbers associated with broadcasting frequencies of received signals are stored in a memory of the broadcast receiver.

When an automatic broadcasting-channel scanning operation is requested by a user, a controller controls an element tuned for receiving a signal to scan broadcasting frequency bands.

Further, the controller associates channel numbers with broadcasting frequencies of the detected signals and stores the channel numbers as channel information.

When a user requests channel up/down, a channel number, etc., the element tuned for receiving a signal is controlled based on the stored information, and thus receives a signal over a broadcasting frequency corresponding to the channel number.

While the automatic broadcasting-channel scanning operation is performed, all frequency bands are scanned at preset frequency intervals. However, unnecessary frequency bands where there are no effective channels are also scanned. Therefore, it takes a long time to scan all of the broadcasting channels. As the scanning time becomes longer, it may inconvenience and bore a user.

### SUMMARY

According to the present invention there is provided an apparatus and method as set forth in the appended claims. Other features of the invention will be apparent from the dependent claims, and the description which follows.

According to an aspect of an exemplary embodiment, there is provided a broadcast receiver including: a signal receiver configured to receive a broadcasting signal of one frequency band among a plurality of frequency bands; and a controller configured to determine presence or absence of a broadcasting signal for each of the plurality of frequency bands by checking properties of each of the plurality of frequency bands, and control a channel scanning operation to be performed. The channel scanning operation is not performed with regard to one or more frequency bands in which it is determined that the broadcasting signal is absent.

The properties of the frequency band checked by the controller may include an energy level for each of a plurality of frequencies within a spectrum of the frequency band.

The broadcast receiver further may include a storage configured to store channel information, and the controller may control the channel scanning operation to be performed for the frequency band corresponding to the channel information.

In response to receiving a broadcasting signal having a preset energy level or higher through a frequency band previously determined that the corresponding broadcasting signal is absent, the controller may store a channel for the broadcasting signal having the preset energy level or higher.

The controller may store channel scanning information after performing the channel scanning operation.

The broadcast receiver further may include a storage configured to store channel scanning information, and the controller may store the channel scanning information corresponding to a frequency band determined to have a broadcasting signal is present.

According to an aspect of another exemplary embodiment, there is provided a method of controlling a broadcast receiver, the method including: individually receiving a broadcasting signal of one frequency band for each of a plurality of frequency bands; checking properties of each of the plurality of frequency bands; determining presence or absence of a corresponding broadcasting signal for each of the plurality of frequency bands; and controlling a channel scanning operation to be performed. The channel scanning operation is not performed with regard to one or more frequency bands in which it is determined that the corresponding broadcasting signal is absent.

The properties of the frequency band checked by the controller may include an energy level for each of a plurality of frequencies within a spectrum of the frequency band.

The controlling may include controlling the channel scanning operation to be performed for the frequency band corresponding to the channel information.

The method further may include storing a channel for a broadcasting signal having a preset energy level or higher, in response to receiving a broadcasting signal having a preset energy level or higher through a frequency band previously determined that the corresponding broadcasting signal is absent.

The method further may include storing channel information after performing the channel scanning operation.

The method further may include storing the channel information corresponding to a frequency band determined to have a broadcasting signal.

According to an aspect of still another exemplary embodiment, there is provided a method of programming broadcast channels, the method including: checking each of a plurality of broadcast frequency bands for a corresponding frequency band energy level; determining the frequency bands having corresponding energy levels lower than a threshold value and the frequency bands not having corresponding energy levels lower than the threshold value; based on the determining, selecting broadcast frequency bands to be scanned for channel information; and scanning the selected broadcast frequency bands for channel information.

The method may further include storing the scanned channel information. The method may further include storing the determined frequency bands.

The scanning may include scanning a plurality of frequencies within each of the selected broadcast frequency bands for channel information.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram of a broadcast receiver according to an exemplary embodiment;
FIG. 2 is a block diagram of a broadcast receiver according to another exemplary embodiment;
FIG. 3 is a flowchart showing operations of a broadcast receiver according to an exemplary embodiment;
FIG. 4 is a flowchart showing operations of a broadcast receiver according to another exemplary embodiment;
FIG. 5 is a graph showing properties of a frequency band in a broadcast receiver according to an exemplary embodiment; and
FIG. 6 illustrates time to channel automatic setting in a broadcast receiver according to another exemplary embodiment.

### DETAILED DESCRIPTION OF EXEMPLARY EMBODIMENTS

Below, exemplary embodiments will be described in detail with reference to accompanying drawings. The present disclosure may be achieved in various forms and is not limited to the following exemplary embodiments. For convenience of description, parts not directly related to the present disclosure are omitted, and like numerals refer to like elements throughout. Expressions such as "at least one of," when preceding a list of elements, modify the entire list of elements and do not modify the individual elements of the list.

According to an exemplary embodiment, a broadcast receiver 1 may be achieved by a set-top box, or may be mounted inside of a display apparatus. The broadcast receiver 1, according to an exemplary embodiment, may be applied when a user selects automatic channel setup.

According to an exemplary embodiment, the automatic channel setup of the broadcast receiver 1 is achieved by scanning all broadcast frequency bands and setting channels corresponding to some of the frequency bands. The broadcast receiver 1 first checks whether a signal is received through the frequency band corresponding to the channel. If the signal is received, the broadcast receiver 1 checks whether the received signal includes information about the channel. If the received signal includes information about the channel, the broadcast receiver 1 sets a channel based on the channel information.

According to an exemplary embodiment, the broadcast receiver 1 first checks whether a signal is received through the frequency band corresponding to a particular channel, and sets a channel based on the channel information with regard to only the frequency band where the signal is present. Accordingly, it is possible to remarkably shorten the time required to automatically set a channel.

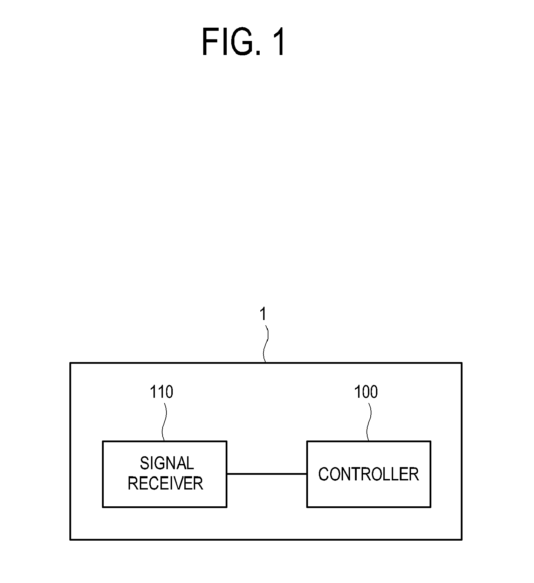

FIG. 1 is a block diagram of a broadcast receiver according to an exemplary embodiment. The broadcast receiver 1 may include a signal receiver 110 and a controller 100.

The signal receiver 110 may receive an image signal/image data, by a wired or wireless connection, and transmit it to the signal processor 120. The signal receiver 110 may receive a broadcasting signal, such as a TV broadcasting signal or the like, from a broadcasting signal transmitter as an image signal; may receive an image signal from an imaging device such as a digital versatile disc (DVD) player, a Blu-ray Disc (BD) player or the like; may receive an image signal from a personal computer (PC); may receive an image signal from a Smart phone, a Smart pad, or other mobile device; may receive an image signal through the Internet or similar network; or may receive an image content stored in a universal serial bus (USB) storage medium or similar storage medium as an image signal. Alternatively, an image signal may be not received through the signal receiver 110, but stored in and provided from a storage 130.

The signal receiver 110 may be provided in various forms corresponding to the format of the received image signal and the type of the broadcast receiver 1. For example, the signal receiver 110 may receive an image signal via standards based on radio frequency (RF), composite video, component video, super video, Syndicat des Constructeurs d'Appareils Radiorecepteurs et Téléviseurs (SCART), high definition multimedia interface (HDMI), display port, unified display interface (UDI), wireless HD, or the like. If the image signal is provided by a broadcasting signal, the signal receiver 110 may include a tuner tuned to a channel for receiving a the signal. The signal receiver 110 may determine whether broadcast signals are received. The signal receiver 110 may receive a broadcasting signal over one frequency band among a plurality of frequency bands corresponding to a plurality of channels.

The controller 100 checks properties of each frequency band of the plurality of frequency bands, and determines presence or absence of broadcasting signals. While channels are scanned corresponding to the plurality of frequency bands, in order to automatically set a plurality of channels, the controller 100 may control the signal receiver 110 to not perform a channel scanning operation with regard to a frequency band, where a broadcasting signal is absent, among the plurality of frequency bands.

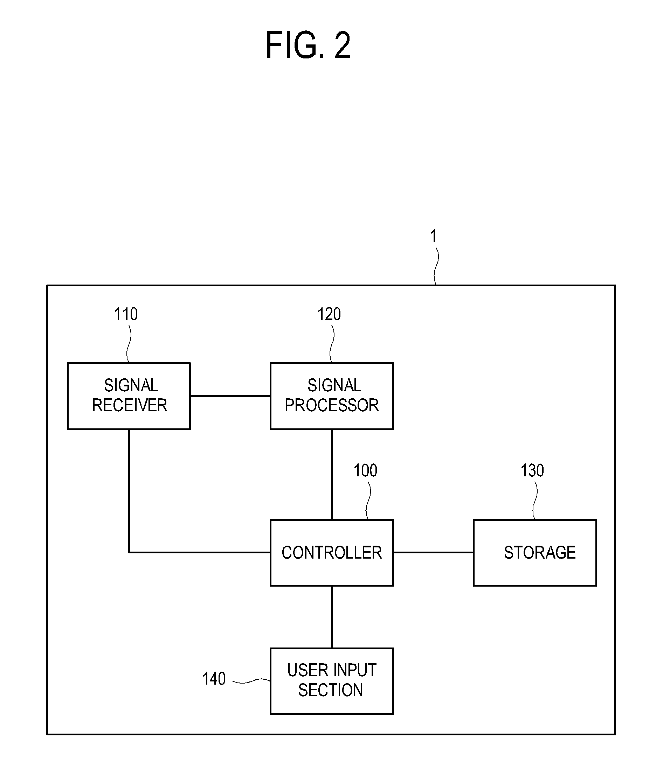

FIG. 2 is a block diagram of a broadcast receiver according to an exemplary embodiment. The broadcast receiver 1, according to an exemplary embodiment, may include the elements of FIG. 1, and may additionally include a signal processor 120, the storage 130 and a user input section 140.

There is no limit to the kinds of image processing performed by the signal processor 120. For example, the image processing may include de-multiplexing for dividing a predetermined signal into other signals, decoding an image signal, de-interlacing for converting an interlaced type of an image signal into a progressive type, noise reduction for improving quality of an image, detail enhancement, frame refresh rate conversion, etc. Meanwhile, there may be further provided a decoder for decoding a source image of an encoded source image, and a frame buffer for storing the decoded source image in units of frame.

The signal processor 120 may be achieved by a system-on-chip (SOC) where various functions are integrated, or individual elements for independently performing processes, and may be mounted to a printed circuit board as an image processing board.

The signal processor 120 performs various preset image processing processes with respect to an image signal received from the signal receiver 110 and a source image including an image signal received from an image source. The signal processor 120 outputs a processed image signal to the display apparatus, so that the source image processed by the broadcast receiver 1 can be displayed.

The storage 130 may be achieved by a non-volatile memory in which data remains even though the broadcast receiver 1 is turned off, and a user's changed matters are reflected. That is, the storage 130 may be provided as one of a flash memory, an erasable programmable read only memory (EPROM) and an electrically erasable programmable read only memory (EEPROM). The storage 130 may store channel scanning information corresponding to one frequency band, and channel scanning information for scanning channels.

The user input section 140 may transmit various preset control commands or information to the controller 100 in response to a user's control and input. The user input section 140 may be include a menu key, an input panel installed at the outside of the broadcasting signal receiving apparatus 1, or a remote controller separately provided from the broadcasting signal receiving apparatus 1. In addition, the user input section 140 may be a touch screen. In the case of the touch screen, a user may touch an input menu displayed on the touch screen so that a preset command can be transmitted to the controller 100.

The user input section 140 may receive a user's motion and voice. A user's motion may include a touch input. The user input 150 may directly receive a user's motion and voice, or may receive information about a user's motion and voice from the external device.

The controller 100 may determine presence or absence of a broadcasting signal by checking energy levels according to frequencies within a spectrum of a frequency band of the plurality of frequency bands.

The controller 100 may perform the channel scanning operation with regard to one frequency band that corresponds to the channel scanning information.

The controller 100 may add and store a channel of a broadcasting signal having a preset energy level or higher, if the broadcasting signal having the preset energy level or higher is received through a frequency band in which it was previously determined that the broadcasting signal is absent.

After scanning channels, the controller 100 may store the channel scanning information about an effective broadcasting signal.

The controller 100 may store the channel scanning information of channels corresponding to one or more frequency bands in which it is determined that a broadcasting is present.

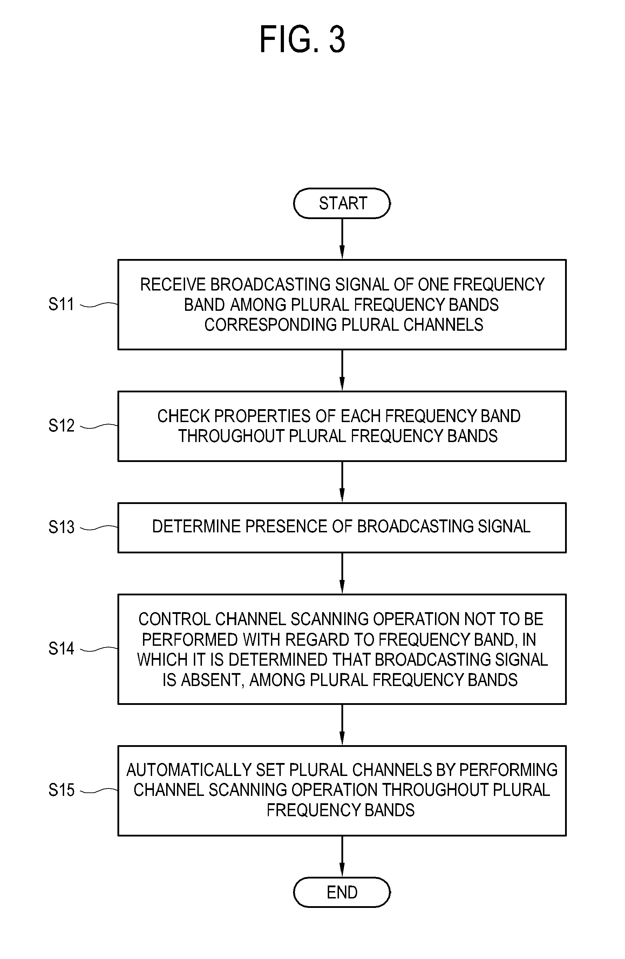

FIG. 3 is a control flowchart showing operations of a broadcast receiver according to an exemplary embodiment.

The signal receiver 110 receives broadcasting signals of a plurality of frequency bands corresponding to a plurality of channels, respectively (S11).

The signal receiver 110 checks the respective properties of the plurality of frequency bands based on the received broadcasting signal (S12).

The controller 100 determines whether the broadcasting signal is present or absent based on the properties of the respective frequency bands (S13).

The controller 100 controls the channel scanning operation to not be performed with regard to the frequency band, in which it is determined that the broadcasting signal is absent, among the plurality of frequency bands (S14).

The controller 100 automatically sets a plurality of channels by performing the channel scanning operation with regard to only the frequency band, in which it is determined that the broadcasting signal is present, among the plurality of frequency bands (S15).

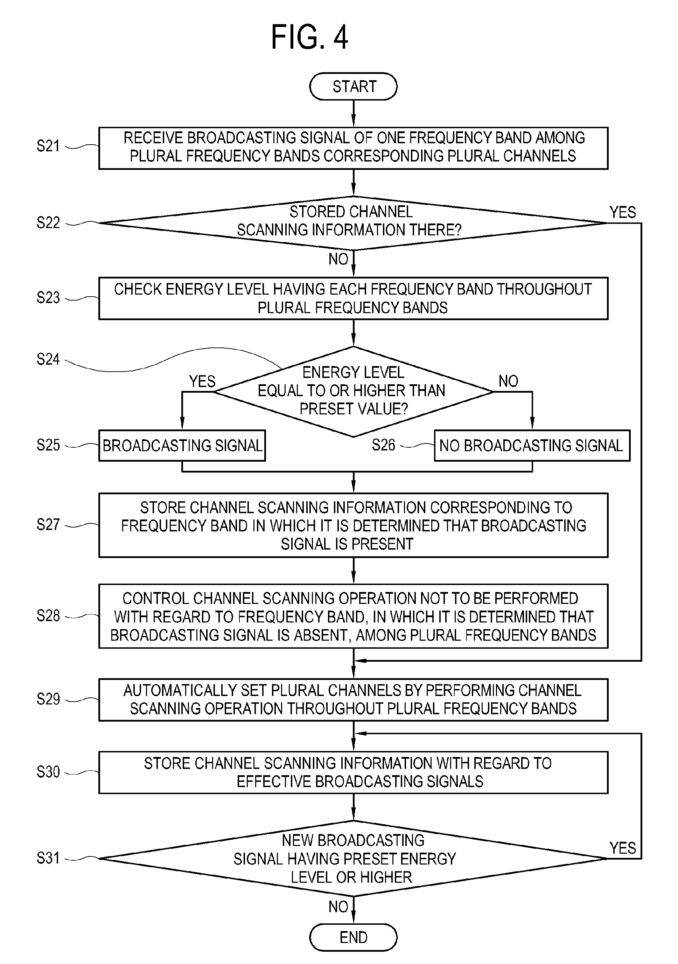

FIG. 4 is a control flowchart showing operations of a broadcast receiver according to an exemplary embodiment.

The signal receiver 110 receives broadcasting signals of a plurality of frequency bands corresponding to a plurality of channels, respectively (S21).

The controller 100 checks whether there is channel scanning information stored in the storage 130 (S22).

If it is determined that there is no stored channel scanning information, the controller 100 checks an energy level of each frequency band throughout the plurality of frequency bands (S23).

The controller 100 determines whether the checked energy level is equal to or higher than a preset value at which it is determined that the broadcasting signal is present (S24).

If the energy level is equal to or higher than the preset value, it is determined that the broadcasting signal is present (S25). On the other hand, if the energy level is lower than the preset value, it is determined that the broadcasting signal is absent (S26).

The controller 100 stores the channel scanning information corresponding to the frequency band in which it is determined that the broadcasting signal is present (S27).

The controller 100 controls the channel scanning operation to not be performed with regard to the frequency band in which it is determined that the broadcasting signal is absent (S28).

The controller 100 automatically sets a plurality of channels by performing the channel scanning operation with regard to the frequency band in which it is determined that the broadcasting signal is present (S29). Further, if it is determined in the operation S22 that there is stored channel scanning information, the controller 100 uses the stored channel scanning information in scanning channels, thereby automatically setting a plurality of channels.

The controller 100 stores the channel scanning information about a frequency band in which it is determined that the broadcasting signal is present, i.e., stores channel scanning information about an effective broadcasting signal (S30).

Then, the controller 100 monitors whether a new broadcasting signal having a preset energy level or higher is received through the frequency band in which it is determined that the broadcasting signal is absent (S31).

If it is determined that a new broadcasting signal is received, the controller 100 may add channel information about the new broadcasting signal to the channel scanning information about the effective broadcasting signals of the operation S30.

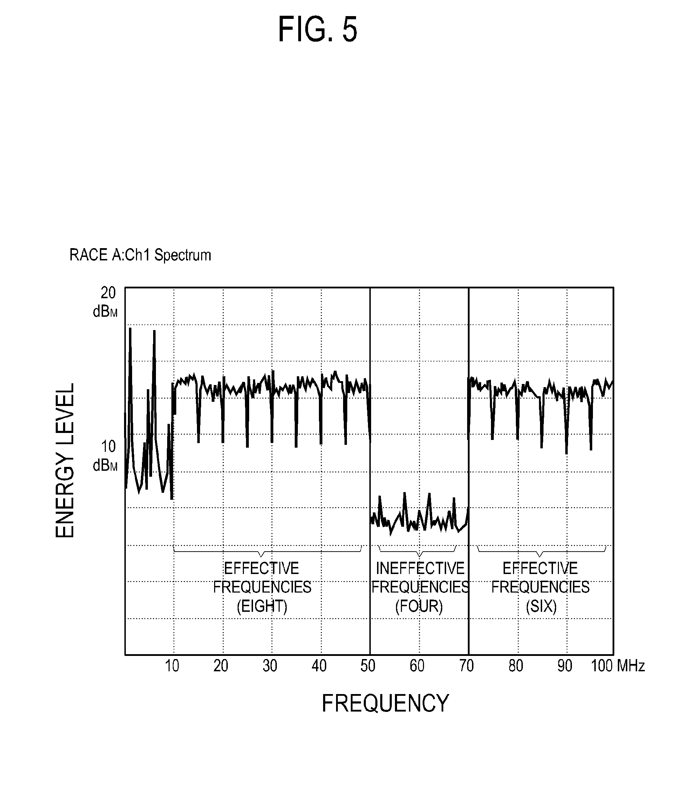

FIG. 5 is a graph showing properties of a frequency band in a broadcast receiver according to an exemplary embodiment

FIG. 5 illustrates the energy levels with regard to signals received through the respective frequency bands. The broadcast receiver 1 determines the energy levels according to the respective frequencies within the monitored spectrum, and differentiates between effective frequencies and ineffective frequencies to be stored as the channel scanning information. FIG. 5 shows the energy level for differentiating between the effective frequencies and the ineffective frequencies.

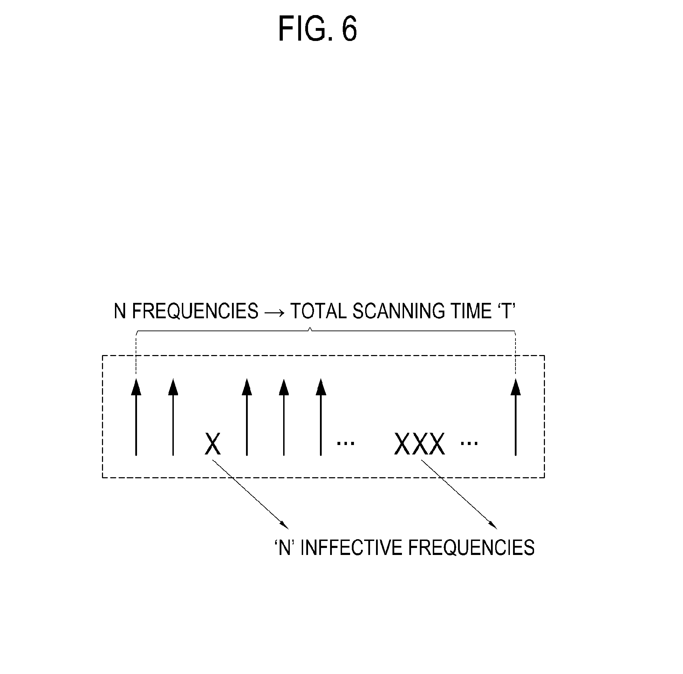

FIG. 6 is an example showing time to channel automatic setting in a broadcast receiver according to another exemplary embodiment.

FIG. 6 illustrates ineffective frequencies as a result of determining the energy levels with regard to the respective frequency bands.

While channels are automatically set with regard to N frequencies, if time t is taken in automatically setting the channels for all the frequency bands without considering the presence of the broadcasting signal or the effectiveness of the frequencies, the broadcast receiver 1, according to an exemplary embodiment, excludes n ineffective frequencies. By excluding the n ineffective frequencies, the time taken in automatically setting the channels can be reduced by as much as t/N*n.

Initially, when the channels have to be automatically set, for example when a user buys the broadcast receiver 1 for the first time or moves the broadcast receiver 1 to a distant place, a frequency band, where it is determined that the broadcasting signal is not received, i.e., an ineffective frequency is determined, and thus the channel scanning operation is performed with regard to only the effective frequencies, thereby shortening time taken in automatically setting the channels.

Further, even after the channels are automatically set, it is monitored whether an effective frequency is present within the frequency band where the broadcasting signal is previously not received, and the monitoring results are stored in the channel scanning information. Thereby, a user is able to view the channels corresponding to the effective frequencies.

According to an exemplary embodiment, channels are automatically scanned excluding a frequency band where there is no broadcasting signal, among a plurality of frequency bands, thereby shortening time taken in automatically setting the channels.

Although a few exemplary embodiments have been shown and described, it will be appreciated by those skilled in the art that changes may be made to these exemplary embodiments without departing from the principles of the invention. Therefore, the foregoing has to be considered as illustrative only. The scope of the invention is defined in the appended claims and their equivalents. Accordingly, all suitable modification and equivalents may fall within the scope of the invention.

Although a few preferred embodiments have been shown and described, it will be appreciated by those skilled in the art that various changes and modifications might be made without departing from the scope of the invention, as defined in the appended claims.

## Claims

1. A broadcast receiver (1) comprising:
a signal receiver (110) configured to receive a broadcasting signal of one frequency band among a plurality of frequency bands; and a controller (100) configured to determine presence or absence of a corresponding broadcasting signal for each of the plurality of frequency bands by checking properties of each of the plurality of frequency bands, and control a channel scanning operation to be performed, wherein the channel scanning operation is not performed with regard to one or more frequency bands in which it is determined that the corresponding broadcasting signal is absent.

2. The broadcast receiver according to claim 1, wherein the properties of the frequency band checked by the controller comprise an energy level for each of a plurality of frequencies within a spectrum of the frequency band.

3. The broadcast receiver according to claim 1 or 2, further comprising a storage (130) configured to store channel information, wherein the controller controls the channel scanning operation to be performed for the frequency band corresponding to the channel information.

4. The broadcast receiver according to claim 1 or 2, wherein, in response to receiving a broadcasting signal having a preset energy level or higher through a frequency band previously determined that the corresponding broadcasting signal is absent, the controller stores a channel for the broadcasting signal having the preset energy level or higher.

5. The broadcast receiver according to one of claim 1 to 4, wherein the controller stores channel scanning information after performing the channel scanning operation.

6. The broadcast receiver according to one of claim 1 to 5, further comprising a storage (130) configured to store channel information, wherein the controller stores the channel scanning information corresponding to a frequency band determined to have a broadcasting signal.

7. A method of controlling a broadcast receiver, the method comprising:
individually receiving (S11) a broadcasting signal of one frequency band for each of a plurality of frequency bands; checking properties (S12) of each of the plurality of frequency bands; determining presence or absence (S13) of a corresponding broadcasting signal for each of the plurality of frequency bands; and controlling a channel scanning operation (S14) to be performed, wherein the channel scanning operation is not performed with regard to one or more frequency bands in which it is determined that the corresponding broadcasting signal is absent.

8. The method according to claim 7, wherein the properties of the frequency band checked by the controller comprise an energy level for each of a plurality of frequencies within a spectrum of the frequency band.

9. The method according to claim 7 or 8, wherein the controlling comprises controlling the channel scanning operation to be performed for the frequency band corresponding to the channel information.

10. The method according to claim 7 or 8, further comprising storing a channel for a broadcasting signal having a preset energy level or higher, in response to receiving a broadcasting signal having a preset energy level or higher through a frequency band previously determined that the corresponding broadcasting signal is absent.

11. The method according to one of claim 7 to 10, further comprising storing channel information after performing the channel scanning operation.

12. The method according to one of claim 7 to 11, further comprising storing the channel information corresponding to a frequency band determined to have a broadcasting signal.

13. A method of programming broadcast channels, the method comprising:
checking (S23) each of a plurality of broadcast frequency bands for a corresponding frequency band energy level; determining (S24) the frequency bands having corresponding energy levels lower than a threshold value and the frequency bands not having corresponding energy levels lower than the threshold value; based on the determining, selecting broadcast frequency bands to be scanned for channel information; andscanning the selected broadcast frequency bands for channel information.

14. The method of claim 13 further comprising: storing the scanned channel information (S30) and the determined frequency bands.

15. The method of claim 13 or 14, wherein the scanning comprises scanning a plurality of frequencies within each of the selected broadcast frequency bands for channel information.
